# EUROPEAN PATENT SPECIFICATION

(11) **EP 2 337 693 B1**
(45) Date of publication and mention of the grant of the patent: **29.06.2016**
(21) Application number: 09818159.7
(22) Date of filing: 31.07.2009
(51) Int. Cl.: B60C 1/00, C08J 11/04, C08J 3/22, C08L 7/00, C08L 9/00, C08L 21/00, C08L 19/00

(54) **RUBBER WITH RECYCLED CONTENT**
GUMMI MIT RECYCELTEM INHALT
CAOUTCHOUC AVEC CONTENU RECYCLÉ

(30) Priority: 30.09.2008 US 101262 P
(43) Date of publication of application: 29.06.2011
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: MEREDITH, Michael, Brett, Greenville SC 29605 (US); PENDER, Mark, J., Maulding SC 29662 (US)
(74) Representative: Dossmann, Gérard
(86) International application number: PCT/US2009/052329
(87) International publication number: WO 2010/039327

(56) References cited:
- WO-A1-00/27915
- WO-A1-2008/052571
- GB-A- 1 412 807
- GB-A- 2 446 592
- US-A1- 2005 203 197
- US-A1- 2007 167 555
- US-A1- 2007 231 532
- US-B1- 6 265 454

## Description

### BACKGROUND OF THE INVENTION

### Field of the Invention

This invention relates generally to crumb rubber and more specifically, to crumb rubber content in rubber compositions.

### Description of the Related Art

In 2005, nearly 300 million tires were generated in the United States and 259 million scrap tires were consumed in end-use markets. Scrap tires are consumed in a variety of scrap tire markets, including tire-derived fuel, civil engineering and ground rubber applications. Ground rubber is also known as crumb rubber or recycled rubber.

Ground rubber applications used about 12 percent of the scrap tires generated. These applications include, for example, rubber-modified asphalts, molded products, sports surfacing, animal bedding, new tire manufacturing and horticultural applications. New tire manufacturing is thought to include about seven percent of the ground rubber market in the United States. Sources for ground rubber include tire buffings from retread operations and processed whole scrap tires. Whole scrap tires are processed by removing the wire and textile to create ground rubber as specified by the market application.

Ground rubber is typically classified by particle size or mesh. Mesh is defined as the number of holes per square inch of a screen used for sorting particles into different sizes. The higher the number of holes in the screen, the smaller the hole size. For example, particles that are 100 mesh or smaller are those that will pass through a screen having 100 holes per square inch of screen.

Only low amounts of ground rubber, usually less than 5% by weight of the rubber in the tire, are used in new tires. The addition of higher percentages of ground rubber has been shown to lower important functional properties such as strain modulus and tensile strength. There is a need for a rubber composition and a method for incorporating ground rubber that does not compromise desirable properties of the rubber composition.

### SUMMARY OF THE INVENTION

Particular embodiments of the present invention include a cross-linked rubber composition comprising a diene rubber and a masterbatch material. The masterbatch comprises between 50 and 75 wt.% natural rubber and between 25 and 50 wt.% crumb rubber particles, the crumb rubber particles being 40 mesh or smaller.

Another embodiment of the present invention includes an article comprising the cross-linked rubber composition, wherein the cross-linked rubber composition comprises a diene rubber and a masterbatch material. The masterbatch comprising between 50 and 75 wt.% natural rubber and between 25 and 50 wt.% crumb rubber particles, the crumb rubber particles being 40 mesh or smaller.

Particular embodiments of the present invention include a method for preparing a rubber composition utilizing crumb rubber. The method may comprise mixing a masterbatch, the masterbatch comprising between 50 and 75 wt.% natural rubber and between 25 and 50 wt.% crumb rubber particles and mixing the masterbatch with a diene rubber.

Particular embodiments of such methods may further include cooling the masterbatch prior to mixing the masterbatch with the diene rubber. Another embodiment may include adding an additives package during the step of mixing the masterbatch with a diene rubber. Still another embodiment of the method includes milling the semi-finished batch and incorporating a curatives package.

The foregoing and other objects, features and advantages of the invention will be apparent from the following more detailed descriptions of particular embodiments of the invention.

### DETAILED DESCRIPTION OF PARTICULAR EMBODIMENTS

Particular embodiments of the present invention include rubber compositions, methods of making rubber compositions and articles comprising the rubber compositions having crumb rubber particles in the rubber compositions. Typically, when ground rubber is added to a rubber composition certain performance properties deteriorate. The inventors of the present invention have discovered that if the crumb rubber is incorporated into the rubber composition through a masterbatch that contains the crumb rubber then the resulting rubber composition may be characterized as having comparable and even enhanced performance properties.

A masterbatch may be a plastic, rubber, or elastomer mixture in which there is a high additives concentration. The additives are then added to the final product composition by adding the masterbatch to the final product composition rather than adding the additive neat. Examples of masterbatches include rubber with carbon black or plastic with color pigment. The masterbatch allows for a homogeneous distribution of the additive throughout the final product composition, in this case, crumb rubber throughout the rubber mixture.

Particular embodiments of a cross-linked rubber composition in accordance with the present invention include a diene rubber and a masterbatch material. The masterbatch comprises a diene rubber and crumb rubber. Suitable diene rubbers for the masterbatch may include, for example, natural rubber (NR), polybutadienes (BR), polyisoprenes (IR), butadiene copolymers, isoprene copolymers and mixtures of these rubbers. The consistency of the masterbatch is dependant upon the rubber chosen for use. Some materials may require additional mixing to improve the consistency of the masterbatch to improve handling properties. In particular embodiments a natural rubber is the diene rubber used in the masterbatch. The masterbatch material may comprise, for example, between 50 and 75 wt.% diene rubber or in other embodiments between 60 and 70 wt.% diene rubber. Particular embodiments of the present invention include use of only a highly unsaturated dienic rubber, such as, natural rubber.

The masterbatch also comprises crumb rubber. Crumb rubber particles are characterized by mesh size. As discussed earlier, the mesh size is defined by the number of holes per square inch of screen so the larger the number of holes, the smaller are the holes in the screen. Crumb rubber particles are readily available on the market in 40 to 220 mesh sizes. Typically the smaller particles are easier to process and yield better performance. Particles that are 40 mesh or smaller are particles that pass through a 40 mesh screen. In particular embodiments, the crumb rubber particles are 40 mesh particles or smaller, 60 mesh particles or smaller, 80 mesh particles or smaller, 120 mesh particles or smaller or combinations thereof. Smaller particles sizes may also be used in particular embodiments.

Crumb rubber particles may be recovered from many types of rubber products, including from whole tires or from the tread only parts of the tires. Particular embodiments of the present invention use crumb rubber particles from tread only materials. Other embodiments use crumb rubber from whole tires. The tread-only particles may include, for example, natural rubber and styrene-butadiene rubber. The whole tire particles may include, for example, natural rubber, styrene-butadiene rubber and butyl rubber in varying concentrations. Particular embodiments include crumb rubber that has not been biodegraded with a biologic agent.

Crumb rubber particles may be ground using a cryogenic process or a mechanical grinding process. In both processes the steel components are removed using a magnetic separator and the fiber components are separated by air classifiers or other separation equipment. In the cryogenic process, shredded rubber is frozen at an extremely low temperature then shattered into small particles. The mechanical grinding process uses a variety of grinding techniques, such as cracker mills, granulators, etc. to mechanically break down the rubber into small particles. Particular embodiments of the present invention use crumb rubber particles produced using a cryogenic process. Other embodiments use crumb rubber particles produced through a mechanical grinding process. A suitable crumb rubber for use in the present invention is, for example, commercially available under the trade names PolyDyne (80 mesh and smaller particles) from Lehigh Technologies or Micron (40 mesh and smaller particles & 80 mesh and smaller particles) from Edge Rubber. PolyDyne from Lehigh is produced using a cryogenic process and Micron from Edge is produced using a mechanical wet grinding process.

While not limiting the invention to any particular range of crumb rubber content, particular embodiments of the present invention include a masterbatch comprising between 25 and 50 wt.% crumb rubber particles, between 30 and 40 wt.% crumb rubber particles, between 1 and 60 wt.% crumb rubber particles or between 15 and 50 wt.% crumb rubber particles.

Particular embodiments of the present invention include a masterbatch mixed with a diene rubber to form a semi-finished batch or cross-linked rubber composition. The diene rubber included in particular embodiments is an essentially unsaturated diene rubber. Diene elastomers or rubber is understood to mean those elastomers resulting at least in part (*i.e.,* a homopolymer or a copolymer) from diene monomers (monomers bearing two double carbon-carbon bonds, whether conjugated or not). Essentially unsaturated diene elastomers are understood to mean those diene elastomers that result at least in part from conjugated diene monomers, having a content of members or units of diene origin (conjugated dienes) that are greater than 15 mol.%.

Thus, for example, diene rubbers such as butyl rubbers, nitrile rubbers or copolymers of dienes and of alpha-olefins of the ethylene-propylene diene terpolymer (EPDM) type or the ethylene-vinyl acetate copolymer type do not fall within the preceding definition, and may in particular be described as "essentially saturated" diene elastomers (low or very low content of units of diene origin, *i.e.,* less than 15 mol.%. Particular embodiments of the present invention may include no essentially saturated diene elastomers.

Within the category of essentially unsaturated diene elastomers are the highly unsaturated diene elastomers, which are understood to mean in particular diene elastomers having a content of units of diene origin (conjugated dienes) that is greater than 50 mol.%.

The diene rubber suitable for use with particular embodiments of the present invention include highly unsaturated diene rubbers, for example, polybutadienes (BR), polyisoprenes (IR), natural rubber (NR), butadiene copolymers, isoprene copolymers and mixtures of these rubbers.

Also suitable for use in particular embodiments of the present invention are diene rubbers that are copolymers and include, for example, butadiene-styrene copolymers (SBR), butadiene-isoprene copolymers (BIR), isoprene-styrene copolymers (SIR) and isoprene-butadiene-styrene copolymers (SBIR), mixtures thereof and/or with other essentially unsaturated and /or highly unsaturated rubber elastomers.

Also suitable for use in particular embodiments of the present invention are rubber elastomers that include, for example, natural rubber, synthetic cis-1,4 polyisoprenes and mixtures thereof and/or with other essentially unsaturated and/or highly unsaturated rubber elastomers. These synthetic cis-1,4 polyisoprenes may be characterized as possessing cis-1,4 bonds at more than 90 mol.% or alternatively, at more than 98 mol.%.

Particular embodiments of the present invention include cross-linked rubber compositions that provide at least 10 phr parts of crumb rubber. Another embodiment of the cross-linked rubber composition provides at least 15 phr parts of crumb rubber in the semi-finished batch. 10-15 phr of the rubber is a measure of crumb rubber particles present in the total rubber composition that includes both the rubber from the masterbatch and the diene rubber in the rubber composition or semi-finished batch. This amounts to at least 10-15 phr parts of crumb rubber in rubber articles comprising the cross-linked rubber composition of the invention.

Particular embodiments of a rubber composition in accordance with the present invention may further include other components such as, for example, reinforcing fillers, coupling agents, plasticizers, various processing aids, oil extenders, antidegradants, or combinations thereof as known to those having ordinary skill in the art. Suitable fillers include carbon black as well as inorganic fillers ("white fillers") such as silica, alumina, aluminum hydroxide, clays, calcium carbonate, glass fibers, microspheres, polymeric fibers such as polyester, nylon, or aramid fibers. Selection of these materials and the quantities of these materials to use are dependent on the elastomers used and the final application of the rubber composition and are easily selected by one having ordinary skill in the art.

Particular embodiments of the present invention include a masterbatch mixed with a diene rubber to form a semi-finished batch or cross-linked rubber composition. The cross-linked rubber composition has a fatigue life, defined as the number of cycles to failure, that is at least 90% of the fatigue life of an identical composition without the crumb rubber particles. In another embodiment of the cross-linked rubber composition the fatigue life is at least 95% of the fatigue life of an identical composition without the crumb rubber particles. In yet another embodiment of the cross-linked rubber composition the fatigue life is at least 99% of the fatigue life of an identical composition without the crumb rubber particles. In still another embodiment of the cross-linked rubber composition the fatigue life is greater than the fatigue life of an identical composition without the crumb rubber particles.

As used herein, fatigue life is measured using ASTM method D 4482-99 where rubber samples undergo a cyclical straining action until failure. Failure is a complete rupture of the test specimen. Fatigue testing results have shown a large standard deviation that is compound dependent. Therefore, fatigue is determined as the average of a set of 12 samples. According to the ASTM method, natural rubber has shown a narrower distribution than many synthetic rubbers.

In particular embodiments of the present invention, the masterbatch is made by combining a diene rubber with crumb rubber particles. For example, the masterbatch material may be mixed in a Werner and Pfleiderer GK 5 U/K mixer until the batch temperature is 170°C. The consistency of the batch is dependent upon the diene rubber chosen for use. The batch may be further mixed in the mixer to achieve a more consistent material. The masterbatch material may then be transferred to an external mixer mill (such as a Lescuyer Villeneuve 300 x 700) for 4 to 7 minutes. Other types of mixers and mills may be used. The masterbatch forms a thick film on the mill rollers. The film is cut and removed from the rollers and laid flat to cool for about one hour. This time may be shortened or extended. The masterbatch material, the additional diene rubber and the additives package may be mixed in the mixer until the mix reaches 155°C. The mix may then be placed on the mill and the curatives package incorporated with the mix while on the mill. The material may then be milled for approximately seven minutes.

Embodiments of the present invention further include articles comprising the cross-linked rubber composition. The cross-linked rubber compositions disclosed herein may be used for various rubber products such as a tread compound, undertread compound, sidewall compound, wire skim compound, inner liner compound, bead, apex, any compound used in a tire carcass, including carcass reinforcement and in other components for tires, industrial rubber products, seals timing belts, power transmission belting, and other rubber goods. As such, the present invention includes products made from the cross-linked rubber compositions disclosed herein. One embodiment of this article is a tire.

A tire includes many different structures including, for example, the tread, the sidewall, the undertread, inner liner, bead, apex and tire carcass. The cross-linked rubber composition of the present invention is particularly suited for use in tire sidewalls. Such structures and tire architecture are well known to one having ordinary skill in the art and therefore, a detailed disclosure of such information is neither required nor proper.

A particular embodiment of the present invention includes methods for preparing a rubber composition utilizing crumb rubber. The method includes mixing a masterbatch, the masterbatch comprising between 50 and 75 wt% natural rubber and between 25 and 50 wt% crumb rubber. The method further comprises cooling the masterbatch and mixing the masterbatch with a diene rubber. Another embodiment of the method includes milling the masterbatch for 4 to 7 minutes at a mill temperature of 30°C prior to mixing the masterbatch with a diene rubber. Still another embodiment of the method includes sub-steps to the mixing the masterbatch with a diene rubber step that includes adding all ingredients except for the curatives package to the mixer and removing from the mixer at 155°C and milling the semi-finished batch for seven minutes. Another embodiment of the method includes incorporating a curatives package during the milling the semi-finished batch step.

The invention is further illustrated by the following example, which is to be regarded only as an illustration and not delimitative of the invention in any way.

### Example 1

Rubber formulations were prepared using the components shown in Table 1. The amount of each component making up the rubber formulations shown in Table 1 are provided in parts per hundred weight (phr) of the rubber. The antidegradant and curing package included typical amounts of antidegradants and curing compounds including TMQ, stearic acid, 6PPD, zinc oxide, sulfur and an accelerator as known to one having ordinary skill in the art.

The masterbatch formulations noted as MB1, MB2, MB3 and MB4 were prepared by mixing natural rubber and crumb rubber in an 8.225 L Werner and Pfleiderer GK 5 U/K mixer at 81 % fill ratio with a water temperature of 27°C and a rotor speed of 70 rpm. Peptisant DBD was added to formulation MB2. The material of masterbatches was allowed to mix until it reached 170°C then it was transferred to a Lescuyer Villeneuve 300x 700 External mixer mill for 4 to 7 minutes. The mill transformed the batch into a thick film. The masterbatch material in this film form was allowed to cool for about an hour.

The rubber formulations R1-R7 were prepared by mixing the components given in Table 1, except for the curing package, with the masterbatch in an 8.225 L Werner mixer at 72% fill ratio with a water temperature of 45°C and a rotor speed of 55 rpm. The piston was raised, cleaned and lowered when the material reached 75°C and again at 135°C. The material was transferred to a Lescuyer Villeneuve mill when the temperature reached 155°C. The material processed on the mill for about 7 minutes. The curatives package was incorporated in the material during this milling time.

The material was milled to a thickness of 1.85 mm and cured at 170°C for 30 minutes. Sample pieces were cut from the cured sheets and tested according to the relevant ASTM testing methods on a Monsanto MFTR apparatus.

Twelve samples per formulation were evaluated for fatigue life. Samples were cut with a standard die. The samples were gripped in place on a rack with one stationary end and one movable end. Each cycle of the fatigue tester consists of increasing strain for one quarter of the cycle time, decreasing strain for one quarter of the cycle time and zero imposed strain for one half of the cycle time. An extension ratio of 75% was used. Samples ran for 5000 cycles then were adjusted on the rack to accommodate for creep. An LED measured the cycle where failure occurred.

**Table 1 - Rubber Formulation and Fatigue Results**

| **Rubber Composition** | **MB1** | **MB2** | **MB3** | **MB4** | **R1 (Witness)** | **R2** | **R3** | **R4** | **R5** | **R6** | **R7** |
|---|---|---|---|---|---|---|---|---|---|---|---|
| Natural Rubber | 100 | 100 | 100 | 100 | 50 | 33.50 | | | | | |
| Masterbatch MB1 | | | | | | | 50 | | | | 50 |
| Masterbatch MB2 | | | | | | | | 50 | | | |
| Masterbatch MB3 | | | | | | | | | 50 | | |
| Masterbatch MB4 | | | | | | | | | | 50 | |
| BR | | | | | 50 | 50 | 50 | 50 | 50 | 50 | 50 |
| Lehigh CR (80 mesh, cryo) | 50 | 50 | | | | 16.5 | | | | | |
| Edge CR (40 mesh, wet) | | | 50 | | | | | | | | |
| Edge CR (80 mesh, wet) | | | | 50 | | | | | | | |
| Peptisant DBD | | 0.15 | | | | | | | | | |
| Naphthenic oil | | | | | 25 | 20.9 | 25 | 25 | 25 | 25 | 25 |
| Carbon Black | | | | | 60 | 50.1 | 60 | 60 | 60 | 60 | 60 |
| Antidegradant & Curing Package | | | | | 12 | 12 | 12 | 12 | 12 | 12 | 12 |
| **Test Results** | | | | | | | | | | | |
| Fatigue Life (cycles) | | | | | 89925 | 4664 2 | 842 42 | 8947 5 | 9635 0 | 1522 17 | 1084 25 |

Compositions R1 and R2 are the witness formulas to be used for performance comparisons. R1 contains a 50/50 blend of natural rubber and butadiene rubber. R2 contains a blend of natural rubber, butadiene rubber and crumb rubber where the crumb rubber is added to the semi-finished batch. The test compositions contain a 50/50 blend of butadiene rubber and a masterbatch where the masterbatch contains natural rubber and crumb rubber. The witness R1 is the identical rubber composition without the crumb rubber particles used in the comparison of fatigue life. The witness R2 demonstrates performance of formulations with the same amount of crumb rubber added without the aid of the masterbatch.

The results of fatigue testing show the poor performance of the R2 formula which is known in the art. Compositions R3 - R7 show comparable to improved fatigue life results when compared to the identical rubber composition without the crumb rubber particles. The lowest fatigue life value of the test compositions is within 7% of the witness fatigue life value.

## Claims

1. A cross-linked rubber composition, comprising:
a diene rubber; and a masterbatch material comprising between 50 and 75 wt.% natural rubber and between 25 and 50 wt.% crumb rubber particles, wherein the crumb rubber particles are 40 mesh or smaller.

2. The cross-linked rubber composition of claim 1, wherein a fatigue life (cycles to failure) measured using ASTM method D 4482-99 of the rubber composition is at least 90% of a fatigue life of an identical rubber composition without the crumb rubber particles.

3. The cross-linked rubber composition of claim 1, wherein the masterbatch comprises between 60 and 70 wt.% natural rubber and between 30 and 40 wt.% crumb rubber particles.

4. The cross-linked rubber composition of claim 1, wherein the crumb rubber particles are cryogenically processed.

5. The cross-linked rubber composition of claim 1, wherein the diene rubber is a highly unsaturated diene rubber.

6. The cross-linked rubber composition of claim 5, wherein the diene rubber is a natural rubber.

7. The cross-linked rubber composition of claim 2, wherein the fatigue life of the rubber composition is at least 99% of the fatigue life of the identical rubber composition without the crumb rubber particles.

8. The cross-linked rubber composition of claim 1, wherein the crumb rubber particles are 60 mesh or smaller.

9. The cross-linked rubber composition of claim 8, wherein the crumb rubber particles are 80 mesh or smaller.

10. The cross-linked rubber composition of claim 1, wherein the rubber composition comprises at least 10 phr of crumb rubber provided by the masterbatch.

11. An article comprising the cross-linked rubber composition of any one of the above claims.

12. The article of claim 11, wherein the article is a tire.

13. A method for manufacturing an article from a rubber composition having crumb rubber, the method comprising:
providing the rubber composition by mixing a masterbatch, the masterbatch comprising between 50 and 75 wt.% natural rubber and between 25 and 50 wt.% crumb rubber particles; and
mixing the masterbatch with a diene rubber; and then
forming at least a portion of the article from the rubber composition.

14. The method of claim 13, wherein the masterbatch comprises between 60 and 70 wt.% natural rubber and between 30 and 40 wt.% crumb rubber particles.

15. The method of claim 13, further comprising:
cooling the masterbatch before the step of mixing the masterbatch and the diene rubber.

16. The method of claim 13, further comprising:
milling the masterbatch for 4 to 7 minutes at a mill temperature of 30°C before the stepof mixing the masterbatch and the diene rubber.

## Patentansprüche

1. Quervernetzte Gummimischung, welche beinhaltet:
einen Dien-Kautschuk; und ein Masterbatchmaterial, welches zwischen 50 und 75 Gew.-% Naturkautschuk und zwischen 25 und 50 Gew.-% Gummigranulatpartikel beinhaltet, wobei die Gummigranulatpartikel 40 Mesh oder kleiner sind.

2. Quervernetzte Gummimischung nach Anspruch 1, wobei eine nach dem ASTM Verfahren D 4482-99 gemessene Ermüdungslebensdauer (Zyklen bis zum Versagen) der Gummimischung mindestens 90 % einer Ermüdungslebensdauer einer identischen Gummimischung ohne Gummigranulatpartikel ist.

3. Quervernetzte Gummimischung nach Anspruch 1, wobei der Masterbatch zwischen 60 und 70 Gew.-% Naturkautschuk und zwischen 30 und 40 Gew.-% Gummigranulatpartikel beinhaltet.

4. Quervernetzte Gummimischung nach Anspruch 1, wobei die Gummigranulatpartikel kryogen verarbeitet sind.

5. Quervernetzte Gummimischung nach Anspruch 1, wobei der Dien-Kautschuk ein hochungesättigter Dien-Kautschuk ist.

6. Quervernetzte Gummimischung nach Anspruch 5, wobei der Dien-Kautschuk ein Naturkautschuk ist.

7. Quervernetzte Gummimischung nach Anspruch 2, wobei die Ermüdungslebensdauer der Gummimischung mindestens 99 % der Ermüdungslebensdauer der identischen Gummimischung ohne Gummigranulatpartikel ist.

8. Quervernetzte Gummimischung nach Anspruch 1, wobei die Gummigranulatpartikel 60 Mesh oder kleiner sind.

9. Quervernetzte Gummimischung nach Anspruch 8, wobei die Gummigranulatpartikel 80 Mesh oder kleiner sind.

10. Quervernetzte Gummimischung nach Anspruch 1, wobei die Gummimischung mindestens 10 phr Gummigranulat beinhaltet, welches von dem Masterbatch bereitgestellt wird.

11. Gegenstand, welcher die quervernetzte Gummimischung nach einem der obigen Ansprüche beinhaltet.

12. Gegenstand nach Anspruch 11, wobei der Gegenstand ein Reifen ist.

13. Verfahren zur Herstellung eines Gegenstands aus einer Gummimischung mit Gummigranulat, welche beinhaltet:
Bereitstellen der Gummimischung durch Mischen eines Masterbatches, welcher zwischen 50 und 75 Gew.-% Naturkautschuk und zwischen 25 und 50 Gew.-% Gummigranulatpartikel beinhaltet;
Mischen des Masterbatches mit Dien-Kautschuk; und anschließend
Formen mindestens eines Teiles des Gegenstands aus der Gummimischung.

14. Verfahren nach Anspruch 13, wobei der Masterbatch zwischen 60 und 70 Gew.-% Naturkautschuk und zwischen 30 und 40 Gew.-% Gummigranulatpartikel beinhaltet.

15. Verfahren nach Anspruch 13, welche weiter beinhaltet:
Kühlen des Masterbatches vor dem Schritt des Mischens des Masterbatches und des Dien-Kautschuks.

16. Verfahren nach Anspruch 13, welche weiter beinhaltet:
Fräsen des Masterbatches für 4 bis 7 Minuten bei einer Fräsetemperatur von 30 °C vor dem Schritt des Mischens des Masterbatches und des Dien-Kautschuks.

## Revendications

1. Formulation de caoutchouc réticulé, comportant :
un caoutchouc diène ; et une matière formant mélange maître contenant de 50 à 75 % en poids de caoutchouc naturel et de 25 à 50 % en poids de particules de poudrette de caoutchouc, la grosseur des particules de poudrette de caoutchouc étant de 40 ou moins.

2. Formulation de caoutchouc réticulé selon la revendication 1, dans laquelle une tenue en fatigue (cycles avant rupture), mesurée à l'aide de la méthode ASTM D 4882-99, de la formulation de caoutchouc est au moins égale à 90 % de la tenue en fatigue d'une formulation de caoutchouc identique sans les particules de poudrette de caoutchouc.

3. Formulation de caoutchouc réticulé selon la revendication 1, dans laquelle le mélange maître contient de 60 à 70 % en poids de caoutchouc naturel et de 30 à 40 % en poids de particules de poudrette de caoutchouc.

4. Formulation de caoutchouc réticulé selon la revendication 1, dans laquelle les particules de poudrette de caoutchouc subissent un traitement cryogénique.

5. Formulation de caoutchouc réticulé selon la revendication 1, dans laquelle le caoutchouc diène est un caoutchouc diène hautement insaturé.

6. Formulation de caoutchouc réticulé selon la revendication 5, dans laquelle le caoutchouc diène est un caoutchouc naturel.

7. Formulation de caoutchouc réticulé selon la revendication 2, dans laquelle la tenue en fatigue de la formulation de caoutchouc est au moins égale à 99 % de la tenue en fatigue de la même formulation de caoutchouc sans les particules de poudrette de caoutchouc.

8. Formulation de caoutchouc réticulé selon la revendication 1, dans laquelle les particules de poudrette de caoutchouc ont une grosseur de 60 ou moins.

9. Formulation de caoutchouc réticulé selon la revendication 8, dans laquelle les particules de poudrette de caoutchouc ont une grosseur de 80 ou moins.

10. Formulation de caoutchouc réticulé selon la revendication 1, la formulation de caoutchouc comportant au moins 10 pcc de poudrette de caoutchouc fournis par le mélange maître.

11. Article comportant la formulation de caoutchouc réticulé selon l'une quelconque des revendications précédentes.

12. Article selon la revendication 11, l'article étant un pneumatique.

13. Procédé pour fabriquer un article à partir d'une formulation de caoutchouc contenant de la poudrette de caoutchouc, le procédé comportant :
la réalisation de la formulation de caoutchouc en créant un mélange maître, le mélange maître contenant de 50 à 75 % en poids de caoutchouc naturel et de 25 à 50 % en poids de particules de poudrette de caoutchouc ; et
le mélange du mélange maître avec un caoutchouc diène ; puis
la formation d'au moins une partie de l'article à l'aide de la formulation de caoutchouc.

14. Procédé selon la revendication 13, dans lequel le mélange maître contient de 60 à 70 % en poids de caoutchouc naturel et de 30 à 40 % en poids de particules de poudrette de caoutchouc.

15. Procédé selon la revendication 13, comportant en outre :
un refroidissement du mélange maître avant l'étape de mélange du mélange maître et du caoutchouc diène.

16. Procédé selon la revendication 13, comportant en outre :
un broyage du mélange maître pendant 4 à 7 minutes à une température de 30°C du broyeur avant l'étape de mélange du mélange maître et du caoutchouc diène.
